# EUROPEAN PATENT APPLICATION

(11) **EP 4 489 191 A1**
(43) Date of publication of application: **08.01.2025**
(21) Application number: 22934270.4
(22) Date of filing: 31.03.2022
(51) Int. Cl.: H01M 50/184

(54) **ADHESIVE MEMBER AND ELECTROCHEMICAL DEVICE**

(71) Applicant: Ningde Amperex Technology Limited, Ningde, Fujian 352100 (CN)
(72) Inventor: HAO, Jingmin, Ningde, Fujian 352100 (CN); HUANG, Huifeng, Ningde, Fujian 352100 (CN)
(74) Representative: Icosa
(86) International application number: PCT/CN2022/084654
(87) International publication number: WO 2023/184433

(57) **Abstract**

This application discloses an adhesive member and an electrochemical device. The adhesive member includes a first edge, a second edge, a third edge, a first boundary line, and a second boundary line. The first edge is opposite the second edge, the third edge includes a first end and a second end opposite the first end, and the first end is connected to the second edge. Two ends of the second boundary line are respectively connected to the first boundary line and the first edge, and two ends of the first boundary line are respectively connected to the second boundary line and the second end. An included angle R1 is formed by a connection line between the two ends of the first boundary line and a connection line between two ends of the second boundary line, and 5°≤R1≤235°. With the included angle R1 formed by the first boundary line and the second boundary line, when the adhesive member is bonded to a cell, a crease corresponding to a side edge of the cell is located within the range of the first boundary line and the second boundary line, thereby reducing the risk of sharp corners generated when the adhesive member is pressed down on a surface of the cell, reducing the influence on the outer contour size of the cell, and further reducing the production cost.

## Description

### TECHNICAL FIELD

This application relates to the field of cell technologies, and in particular, to an adhesive member and an electrochemical device.

### BACKGROUND

Currently, an insulating adhesive tape is typically adhered to the exterior of a pouch cell to provide insulation and protection. At a side edge of the cell, the adhesive tape is mostly designed with a straight-edge upright opening. This adhesive tape is easily pressed down during transportation and actual production, causing sharp corners. The presence of sharp corners affects the measurement of the outer contour size of the cell, leading to increased labor cost and unsmooth equipment operation, thus increasing the production cost.

### SUMMARY

In view of the foregoing situation, it is necessary to provide an adhesive member, so as to reduce the risk of sharp corners generated when the adhesive member is pressed down on a surface of a cell, reduce the influence on the outer contour size of the cell, and further reduce the production cost.

An embodiment of this application provides an adhesive member, including a first edge, a second edge, a third edge, a first boundary line, and a second boundary line. The first edge is opposite the second edge, the third edge includes a first end and a second end opposite the first end, and the first end is connected to the second edge. Two ends of the second boundary line are respectively connected to the first boundary line and the first edge, and two ends of the first boundary line are respectively connected to the second boundary line and the second end. An included angle R1 is formed by a connection line between the two ends of the first boundary line and a connection line between two ends of the second boundary line, and 5°≤R1≤235°.

With the included angle R1 formed by the first boundary line and the second boundary line, when the adhesive member is bonded to a cell, a crease corresponding to a side edge of the cell is located within the range of the first boundary line and the second boundary line, thereby reducing the risk of sharp corners generated when the adhesive member is pressed down on a surface of the cell, reducing the influence on the outer contour size of the cell.

In some embodiments of this application, 30°≤R1<180°.

In some embodiments of this application, 60°≤R1≤150°.

In some embodiments of this application, 90°≤R1≤150°.

In some embodiments of this application, the second edge includes a third boundary line, a fourth boundary line, and a fifth boundary line being connected sequentially, two ends of the third boundary line are respectively connected to the fourth boundary line and the first end, an included angle R2 is formed by a connection line between the two ends of the third boundary line and a connection line between two ends of the third edge, and 0°<R2<180°.

In some embodiments of this application, 30°≤R2≤150°.

In some embodiments of this application, an included angle R3 is formed by the connection line between the two ends of the third boundary line and a connection line between two ends of the fourth boundary line, and 30°≤R3≤180°.

In some embodiments of this application, 60°≤R3≤180°.

In some embodiments of this application, an included angle R4 is formed by the connection line between the two ends of the fourth boundary line and a connection line between two ends of the fifth boundary line, and 0°<R4≤180°.

In some embodiments of this application, 30°≤R4≤180°.

In some embodiments of this application, an included angle R5 is formed by the connection line between the two ends of the first boundary line and a first direction, and 5°≤R5≤60°, the first direction being a length direction of the adhesive member.

In some embodiments of this application, an included angle R6 is formed by the connection line between the two ends of the second boundary line and a first direction, and 15°≤R6≤180°, the first direction being a length direction of the adhesive member.

An embodiment of this application provides an electrochemical device, including a housing, an electrode assembly, a tab, and the adhesive member according to any one of the foregoing embodiments. The housing includes a main body portion, a first sealing portion, and a second sealing portion. The first sealing portion and the second sealing portion are both connected to the main body portion. The main body portion has a first surface, a second surface, and a third surface being connected to each other. The first sealing portion extends beyond the first surface, and the second sealing portion extends beyond the second surface and bends towards the third surface. The electrode assembly is accommodated in the main body portion. The tab has one end connected to the electrode assembly and another end extending beyond the housing from the first sealing portion. The first edge is attached to a side of the second sealing portion back away from the second surface, the second edge is attached to the third surface, and the third edge is attached to the first surface and/or the first sealing portion.

With the included angle R1 formed by the first boundary line and the second boundary line, when the adhesive member is bonded to the housing, a crease corresponding to a side edge of the housing is located within the range of the first boundary line and the second boundary line, thereby reducing the risk of sharp corners generated when the adhesive member is pressed down on a surface of the housing, reducing the influence on the outer contour size of the electrochemical device, and further reducing the production cost.

In some embodiments of this application, the second surface intersects the third surface at the first connection line; the adhesive member has a crease, the crease being opposite the first connection line; and the crease intersects the first boundary line or an intersection point between the first boundary line and the second boundary line.

In summary, with the included angle R1 formed by the first boundary line and the second boundary line, when the adhesive member in some embodiments of this application is bonded to a cell, a crease corresponding to a side edge of the cell is located within the range of the first boundary line and the second boundary line, thereby reducing the risk of sharp corners generated when the adhesive member is pressed down on a surface of the cell, reducing the influence on the outer contour size of the cell, and further reducing the production cost.

### BRIEF DESCRIPTION OF DRAWINGS

FIG. 1 is a schematic structural diagram of an adhesive member not bent according to an embodiment of this application.
FIG. 2 is a schematic structural diagram of an adhesive member not bent according to another embodiment of this application.
FIG. 3 is a schematic structural diagram of an adhesive member not bent according to another embodiment of this application.
FIG. 4 is a schematic structural diagram of an adhesive member not bent according to another embodiment of this application.
FIG. 5 is a schematic structural diagram of an adhesive member not bent according to another embodiment of this application.
FIG. 6 is a schematic structural diagram of an adhesive member not bent according to another embodiment of this application.
FIG. 7 is a schematic structural diagram of an adhesive member not bent according to another embodiment of this application.
FIG. 8 is a schematic structural diagram of an adhesive member not bent according to another embodiment of this application.
FIG. 9 is a schematic structural diagram of an adhesive member not bent according to another embodiment of this application.
FIG. 10 is a schematic structural diagram of an adhesive member not bent according to another embodiment of this application.
FIG. 11 is a schematic diagram of a partial structure of an electrochemical device according to an embodiment of this application.
FIG. 12 is a schematic structural diagram of a housing before encapsulation according to an embodiment of this application.
FIG. 13 is a schematic structural diagram of an electrochemical device being in a state according to an embodiment of this application.
FIG. 14 is a schematic structural diagram of the electrochemical device being in another state according to an embodiment of this application.

### Reference signs of main components:

| | |
|---|---|
| Electrochemical device | 100 |
| Adhesive member | 10 |
| First edge | 11 |
| Second edge | 12 |
| Third boundary line | 121 |
| Fourth boundary line | 122 |
| Fifth boundary line | 123 |
| Third edge | 13 |
| First end | 131 |
| Second end | 132 |
| First boundary line | 14 |
| Second boundary line | 15 |
| Crease | 16 |
| Fourth edge | 17 |
| Housing | 20 |
| Main body portion | 21 |
| First surface | 211 |
| Second surface | 212 |
| Third surface | 213 |
| First connection line | 214 |
| First sealing portion | 22 |
| Second sealing portion | 23 |
| First layer | 24 |
| Third layer | 25 |
| First folding portion | 26 |
| Second folding portion | 27 |
| Accommodation groove | 28 |
| Sealing portion | 29 |
| Electrode assembly | 30 |
| Positive electrode tab | 41 |
| Negative electrode tab | 42 |
| First direction | X |
| Second direction | Y |

This application is further described with reference to the accompanying drawings in the following specific embodiments.

### DESCRIPTION OF EMBODIMENTS

The following describes the technical solutions in some embodiments of this application with reference to the accompanying drawings in these embodiments of this application. Apparently, the described embodiments are only some rather than all embodiments of this application.

It should be noted that when one component is assumed as being "connected to" another component, it may be connected to the another component directly or with a component possibly present therebetween. When one component is assumed as being "disposed on/in" another component, the component may be provided directly on/in the another component or with a component possibly present therebetween.

Unless otherwise defined, all technical and scientific terms used herein shall have the same meanings as commonly understood by those skilled in the art to which this application pertains. The terms used herein in the specification of this application are intended to merely describe the specific embodiments rather than to limit this application.

In this application, the term "parallel" is used to describe the ideal state between two components (edges or lines or surfaces). During actual production or use, an approximately parallel state may be present between the two components. For example, with reference to the description of numerical values, "parallel" may indicate that an included angle between two straight lines is within a range of 180°±10°, "parallel" may alternatively indicate that a dihedral angle of two planes is within a range of 180°±10°, and "parallel" may further alternatively indicate that an included angle between a straight line and a plane is within a range of 180°±10°. Two components described as "parallel" to each other may not be absolutely straight lines or planes, and may be approximately straight lines or planes. From a macro perspective, a component can be considered as a "straight line" or "plane" as long as the overall extension direction is a straight line or a plane.

The term "perpendicular" is used to describe the ideal state between two components (edges or lines or surfaces). In actual production or use, an approximation of this perpendicular state can exist between two parts. For example, with reference to the description of numerical values, "perpendicular" may indicate that an included angle between two straight lines is within a range of 90°±10°, "perpendicular" may alternatively indicate that a dihedral angle of two planes is within a range of 90°±10°, and "perpendicular" may alternatively indicate that an included angle between a straight line and a plane is within a range of 90°±10°. Two components described as "perpendicular" to each other may not be absolutely straight lines or planes, and may be approximately straight lines or planes. From a macro perspective, a component can be considered as a "straight line" or "plane" as long as the overall extension direction is a straight line or a plane.

An embodiment of this application provides an adhesive member, including a first edge, a second edge, a third edge, a first boundary line, and a second boundary line. The first edge is opposite the second edge, the third edge includes a first end and a second end opposite the first end, and the first end is connected to the second edge. Two ends of the second boundary line are respectively connected to the first boundary line and the first edge, and two ends of the first boundary line are respectively connected to the second boundary line and the second end. An included angle R1 is formed by a connection line between the two ends of the first boundary line and a connection line between two ends of the second boundary line, and 5°≤R1≤235°.

With the included angle R1 formed by the first boundary line and the second boundary line, when the adhesive member is bonded to a cell, a crease corresponding to a side edge of the cell is located within the range of the first boundary line and the second boundary line, thereby reducing the risk of sharp corners generated when the adhesive member is pressed down on a surface of the cell, reducing the influence on the outer contour size of the cell, and further reducing the production cost.

The following further describes some embodiments of this application with reference to the accompanying drawings.

### Embodiment 1

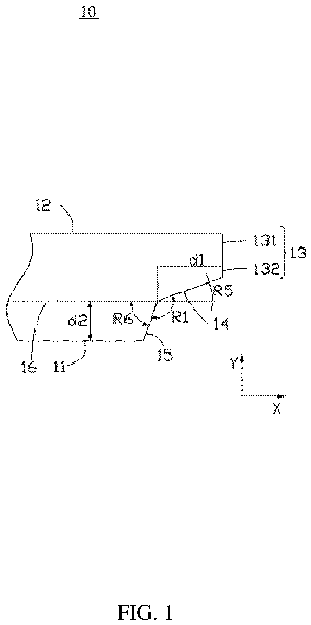

As shown in FIG. 1, Embodiment 1 of this application provides an adhesive member 10 which can be used to bond a pouch cell, providing insulation and protection.

The adhesive member 10 includes a first edge 11, a second edge 12, a third edge 13, a first boundary line 14, and a second boundary line 15. The first edge 11 is opposite the second edge 12, the third edge 13 is connected to the second edge 12, the third edge 13 is away from the first edge 11, two ends of the first boundary line 14 are respectively connected to the third edge 13 and the second boundary line 15, and two ends of the second boundary line 15 are respectively connected to the first boundary line 14 and the first edge 11. The third edge 13 includes a first end 131 and a second end 132 opposite the first end 131. The first end 131 is connected to the second edge 12, and the second end 132 is connected to the first boundary line 14. An included angle R1 is formed by a connection line between the two ends of the first boundary line 14 and a connection line between two ends of the second boundary line 15, and 5°≤R1≤235°. With the included angle R1 formed by the first boundary line 14 and the second boundary line 15, when the adhesive member 10 is bonded to a cell, the adhesive member 10 and a crease corresponding to a side edge of the cell is located within the range of the first boundary line 14 and the second boundary line 15, thereby reducing the risk of sharp corners generated when the adhesive member 10 is pressed down, reducing the influence on the outer contour size of the cell, and further reducing the production cost. In this application, the included angle R1 is an included angle that is formed as the connection line between the two ends of the first boundary line 14 intersects the connection line between the two ends of the second boundary line 15 and located outside the adhesive member 10.

Specifically, the value of the included angle R1 may be any one of 5°, 15°, 30°, 45°, 60°, 75°, 90°, 95°, 135°, 140°, 145°, 150°, 155°, 160°, 165°, 170°, 175°, 185°, 190°, 195°, 200°, 205°, 210°, 215°, 220°, 225°, 230°, and 235°.

The adhesive member 10 is made of an insulating material. In an embodiment, the adhesive member 10 includes an insulating adhesive tape.

In some embodiments, 30°≤R1<180°. When the adhesive member 10 is bonded to the cell, the adhesive member 10 and the crease corresponding to the side edge of the cell are located within the range of the first boundary line 14 and the second boundary line 15. The adhesive member 10 can attach to an exposed metal layer of the housing of the cell to provide insulation and protection. This can further reduce the risks of short circuit in the cell and sharp corners when the side edge of the cell is pressed down, further reducing the impact on the outer contour size of the cell, thus further reducing the production cost. In some other embodiments, 135°≤R1≤150°. In some other embodiments, 5°≤R1≤75°.

In an embodiment, the first edge 11 and the second edge 12 are parallel to each other and both are parallel to a first direction X, the first direction X being the length direction of the adhesive member 10. In this application, the length direction of the adhesive member 10 is the extension direction of the adhesive member 10.

In an embodiment, an included angle R5 is formed by the connection line between the two ends of the first boundary line 14 and the first direction X, and 5°≤R5≤60°. In an embodiment, 15°≤R5≤45°. Optionally, the value of the included angle R5 may be any one of 15°, 20°, 25°, 30°, 35°, 40°, and 45°. In this application, the included angle R5 is the smallest angle formed by the connection line between the two ends of the first boundary line 14 and the first direction X.

In an embodiment, an included angle R6 is formed by the connection line between the two ends of the second boundary line 15 and the first direction X, and 15°≤R6≤180°. In this application, the included angle R6 is an included angle that is formed as the connection line between the two ends of the second boundary line 15 intersects the first direction X and located in the adhesive member 10. Optionally, the value of the included angle R6 may be any one of 15°, 20°, 25°, 30°, 35°, 40°, 45°, 50°, 55°, 60°, 70°, 80°, 90°, 100°, 120°, 135°, 150°, 165°, and 180°.

In an embodiment, 15°≤R6<90°, as shown in FIG. 1. In another embodiment, 90°≤R6≤180°.

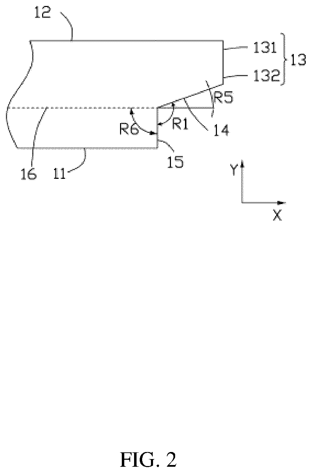

As shown in FIG. 2, in another embodiment, R6=90°, and the second boundary line 15 is perpendicular to the first direction X and the first edge 11.

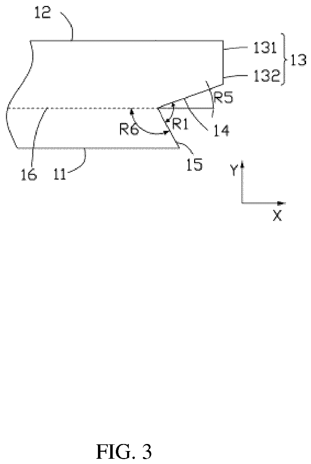

As shown in FIG. 3, in another embodiment, 90°<R6<180°.

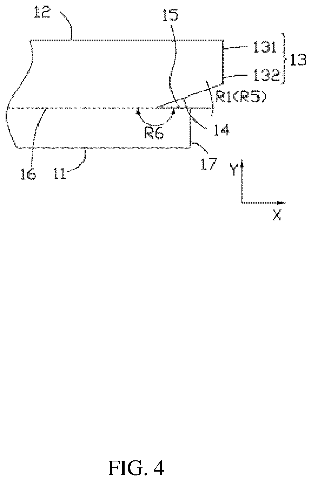

As shown in FIG. 4, in another embodiment, R6=180°, and the second boundary line 15 is parallel to the first direction X and the first edge 11. The adhesive member 10 further includes a fourth edge 17, with two ends of the fourth edge 17 respectively connected to the second boundary line 15 and the first edge 11.

Further description is made using 15°≤R6<90° as an example.

Still referring to FIG. 1, in an embodiment, along the first direction X, the length of the first boundary line 14 is d1, and d1>1 mm. In some embodiments, 1.5 mm≤d1≤3 mm. In this application, the length d1 is the perpendicular distance between the two ends of the first boundary line 14 along the first direction X. Optionally, the value of d1 may be any one of 1.5 mm, 2 mm, 2.5 mm, and 3 mm.

In an embodiment, along the second direction Y perpendicular to the first direction X, the length of the second boundary line 15 is d2, and d2≥1 mm. In some embodiments, 1 mm≤d2≤5.5 mm. In this application, the length d2 is the perpendicular distance between the two ends of the second boundary line 15 along the second direction Y. Optionally, the value of d2 may be any one of 1mm, 1.5 mm, 2 mm, 2.5 mm, 3 mm, 3.5 mm, 4 mm, 4.5 mm, 5 mm, and 5.5 mm.

In an embodiment, the second direction Y is the width direction of the adhesive member 10. In an embodiment, the connection line between the first end 131 and the second end 132 of the third edge 13 is parallel to the second direction Y, and the connection line between the first end 131 and the second end 132 is perpendicular to the first edge 11 and the second edge 12.

In an embodiment, the first boundary line 14 intersects the second boundary line 15 to form a structure concave to the adhesive member 10, as shown in FIG. 1, and R1<180°.

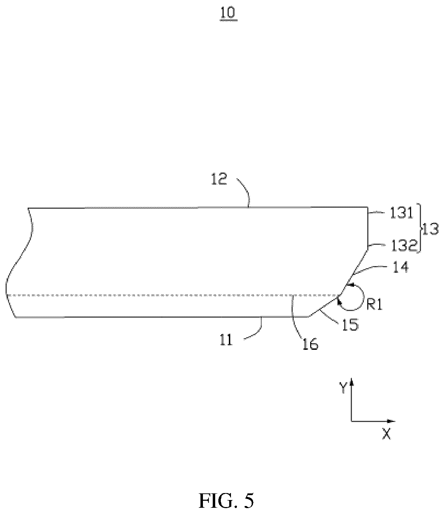

As shown in FIG. 5, in an embodiment, the first boundary line 14 intersects the second boundary line 15 to form a structure convex from the adhesive member 10, and R1>180°. In an embodiment, along the first direction X, the intersection point of the first boundary line 14 and the second boundary line 15 is located between the intersection point of the first boundary line 14 and the third edge 13, and the intersection point of the second boundary line 15 and the first edge 11. In another embodiment, along the first direction X, the intersection point of the first boundary line 14 and the second boundary line 15 extends beyond the third edge 13 (not shown in the figure).

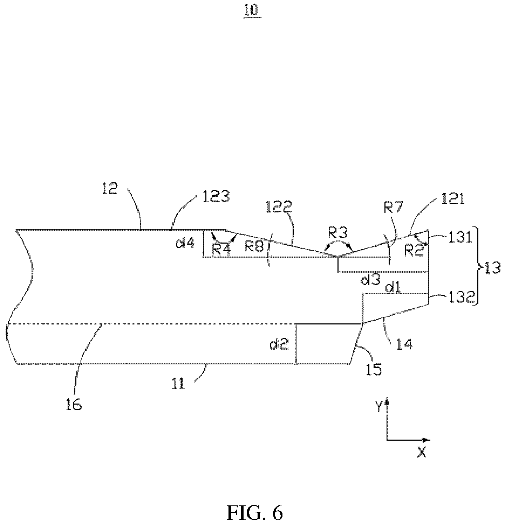

As shown in FIG. 6, in an embodiment, the second edge 12 includes a third boundary line 121, a fourth boundary line 122, and a fifth boundary line 123 being connected sequentially. Two ends of the third boundary line 121 are respectively connected to the fourth boundary line 122 and the first end 131, and two ends of the fourth boundary line 122 are respectively connected to the third boundary line 121 and the fifth boundary line 123. In an embodiment, the fifth boundary line 123 is parallel to the first edge 11.

An included angle R2 is formed by the connection line between the two ends of the third boundary line 121 and a connection line between the two ends of the third edge 13, and 0°<R2<180°. In an embodiment, 30°≤R2≤150°. In an embodiment, 45°≤R2≤120°. In an embodiment, 60°≤R2≤120°.

Optionally, the value of the included angle R2 may be any one of 60°, 65°, 70°, 75°, 80°, 85°, 90°, 95°, 100°, 105°, 110°, 115°, and 120°.

In an embodiment, an included angle R3 is formed between the connection line between the two ends of the third boundary line 121 and a connection line between two ends of the fourth boundary line 122, and 30°≤R3≤180°. In this application, the included angle R3 is an included angle formed as the connection line between the two ends of the third boundary line 121 intersects the connection line between the two ends of the fourth boundary line 122, and located outside the adhesive member 10.

In an embodiment, 60°≤R3≤180°. In an embodiment, 90°≤R3≤180°. In an embodiment, 120°≤R3≤180°. Optionally, the value of the included angle R3 may be any one of 120°, 125°, 130°, 135°, 140°, 145°, 150°, 155°, 160°, 165°, 170°, 175°, and 180°.

In an embodiment, an included angle R4 is formed by the connection line between the two ends of the fourth boundary line 122 and a connection line between two ends of the fifth boundary line 123, and 0°<R4≤180°. In this application, the included angle R4 is an included angle formed as the connection line between the two ends of the fourth boundary line 122 intersects the connection line between the two ends of the fifth boundary line 123, and located in the adhesive member 10.

In an embodiment, 30°≤R4≤180°. In an embodiment, 60°≤R4≤150°. In an embodiment, 90°≤R4≤150°. Optionally, the value of the included angle R4 may be any one of 90°, 95°, 100°, 105°, 110°, 115°, 120°, 125°, 130°, 135°, 140°, 145°, and 150°.

In an embodiment, an included angle R7 is formed by the connection line between the two ends of the third boundary line 121 and the first direction X, and 0°≤R7≤90°. In an embodiment, 15°≤R7≤60°. In this application, the included angle R7 is the smallest angle formed by the connection line between the two ends of the third boundary line 121 and the first direction X. Optionally, the value of the included angle R7 may be any one of 15°, 17°, 20°, 25°, 30°, 35°, 40°, 45°, 50°, 55°, and 60°.

In an embodiment, an included angle R8 is formed by the connection line between the two ends of the fourth boundary line 122 and the first direction X, and 0°≤R8≤90°. In an embodiment, 13°≤R8≤60°. In this application, the included angle R8 is the smallest angle formed by the connection line between the two ends of the fourth boundary line 122 and the first direction X. Optionally, the value of the included angle R8 may be any one of 13°, 15°, 20°, 25°, 30°, 35°, 40°, 45°, 50°, 55°, and 60°.

In an embodiment, along the first direction X, the length of the third boundary line 121 is d3, and d3≥1.5 mm. In some embodiments, 1.5 mm≤d3≤3 mm. In this application, the length d3 is the perpendicular distance between the two ends of the third boundary line 121 along the first direction X. Optionally, the value of d3 may be any one of 1.5 mm, 2 mm, 2.5 mm, and 3 mm.

In an embodiment, d3=d1+0.5 mm.

In an embodiment, along the second direction Y, the length of the fourth boundary line 122 is d4, and d4≥1 mm. In this application, the length d4 is the perpendicular distance between the two ends of the fourth boundary line 122 along the second direction Y Optionally, the value of d3 may be any one of 1.5 mm, 2 mm, 2.5 mm, and 3 mm.

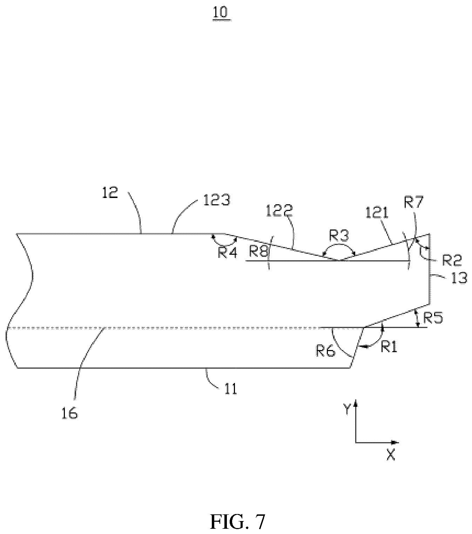

As shown in FIG. 7, in an embodiment, R1=128°, R5=20°, R6=72°, R2=73°, R3=150°, R7=17°, R8=13°, and R4=167°. The first boundary line 14 intersects the second boundary line 15 to form a structure concave to the adhesive member 10. The third boundary line 121 intersects the fourth boundary line 122 to form a structure concave to the adhesive member 10.

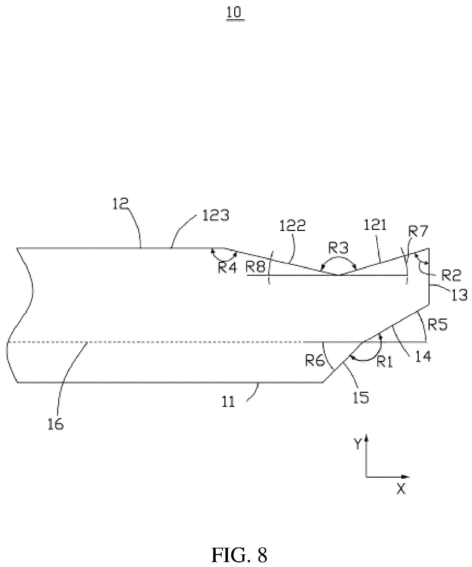

As shown in FIG. 8, in an embodiment, R1=165°, R5=30°, R6=45°, R2=73°, R3=150°, R7=17°, R8=13°, and R4=167°. The first boundary line 14 intersects the second boundary line 15 to form a structure concave to the adhesive member 10. The third boundary line 121 intersects the fourth boundary line 122 to form a structure concave to the adhesive member 10.

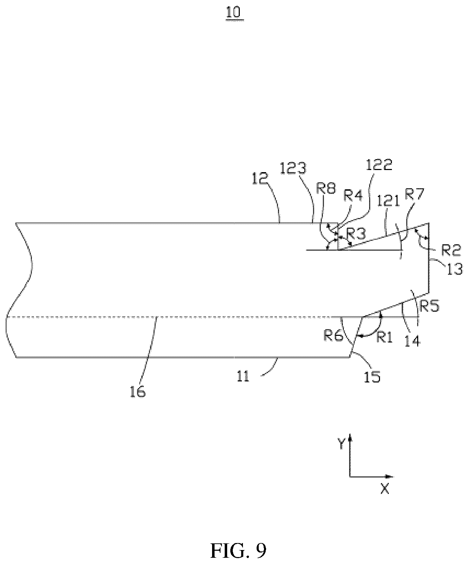

As shown in FIG. 9, in an embodiment, R1=128°, R5=20°, R6=72°, R2=73°, R3=73°, R7=17°, R8=90°, and R4=90°. The first boundary line 14 intersects the second boundary line 15 to form a structure concave to the adhesive member 10. The third boundary line 121 intersects the fourth boundary line 122 to form a structure concave to the adhesive member 10, and the fourth boundary line 122 is perpendicular to the fifth boundary line 123.

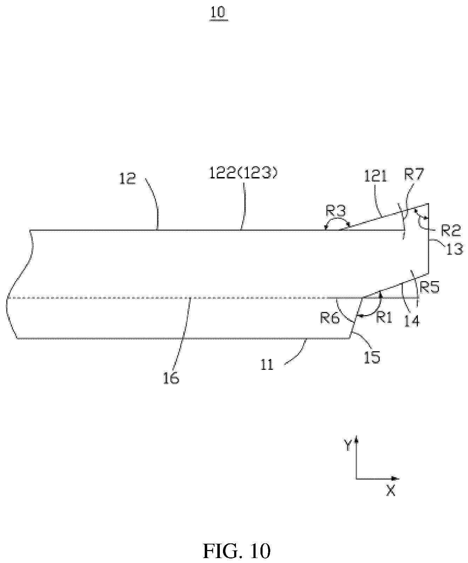

As shown in FIG. 10, in an embodiment, R1=128°, R5=20°, R6=72°, R2=73°, R3=163°, R7=17°, R8=00°, and R4=180°. The first boundary line 14 intersects the second boundary line 15 to form a structure concave to the adhesive member 10. The third boundary line 121 intersects the fourth boundary line 122 to form a structure concave to the adhesive member 10. In an embodiment, both the fourth boundary line 122 and the fifth boundary line 123 are parallel to the first edge 11.

### Embodiment 2

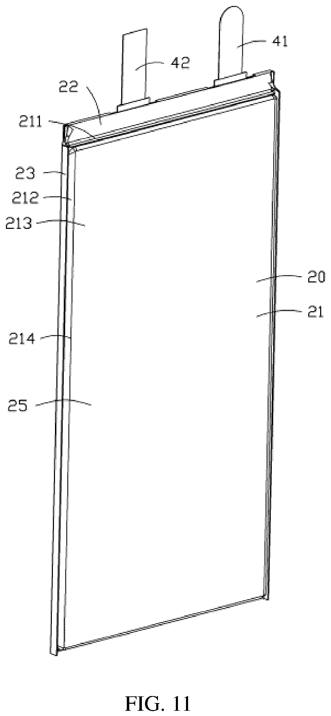

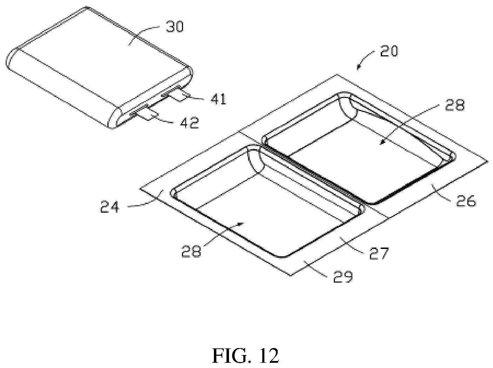

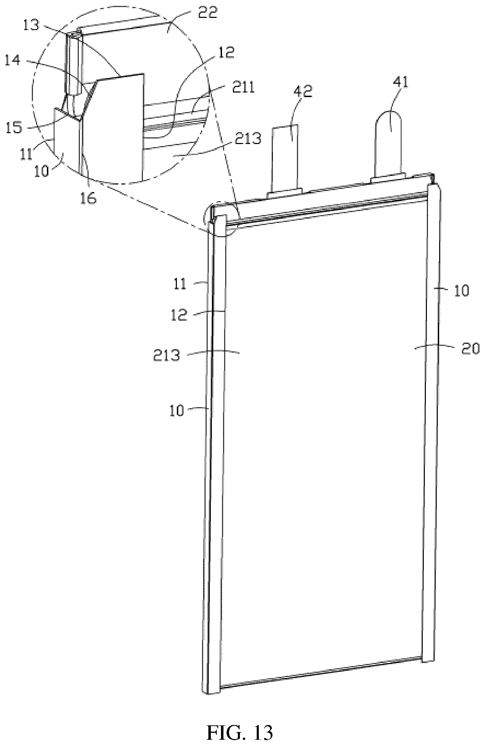

As shown in FIGs. 11, 12, and 13, Embodiment 2 of this application provides an electrochemical device 100 that can be used to store electrical energy and supply power to electrical equipment. The electrochemical device 100 includes a housing 20, an electrode assembly 30, a tab, and the adhesive member 10 according to Embodiment 1. The electrode assembly 30 is accommodated in the housing 20, and the tab has one end connected to the electrode assembly 30 and another end extending beyond of the housing 20. The adhesive member 10 is bonded to a surface of the housing 20.

The housing 20 includes a main body portion 21, a first sealing portion 22, and a second sealing portion 23. The electrode assembly 30 is accommodated in the main body portion 21. The first sealing portion 22 and the second sealing portion 23 extend beyond the surface of the main body portion 21, and the tab extends beyond the housing 20 from the first sealing portion 22.

The electrode assembly 30 includes a positive electrode plate, a negative electrode plate, and a separator. The separator is placed between the positive electrode plate and the negative electrode plate. The positive electrode plate, the separator, and the negative electrode plate are stacked or wound.

The tab includes a positive electrode tab 41 and a negative electrode tab 42. The positive electrode tab 41 has one end connected to the positive electrode plate and another end extending beyond the housing 20. The negative electrode tab 42 has one end connected to the negative electrode plate and another end extending beyond the housing 20.

The main body portion 21 has a first surface 211, a second surface 212, and a third surface 213 being connected to each other. The first sealing portion 22 extends beyond the first surface 211, and the second sealing portion 23 extends beyond the second surface 212 and bends towards the third surface 213. In an embodiment, the second sealing portion 23 is attached to the second surface 212.

The first edge 11 of the adhesive member 10 is attached to a side of the second sealing portion 23 back away from the second surface 212, the second edge 12 is attached to the third surface 213, and the third edge 13 bends towards the first sealing portion 22 from the third surface 213 to be attached to the first surface 211 and/or the first sealing portion 22.

In an embodiment, before the electrochemical device 100 is packaged, the housing 20 includes a first folding portion 26 and a second folding portion 27, at least one of which is provided with an accommodation groove 28 for accommodating the electrode assembly 30. The electrode assembly 30 is accommodated in the accommodation groove 28, and the first folding portion 26 and the second folding portion 27 are folded and connected to form the main body portion 21 and a sealing portion 29. The sealing portion 29 extends outwards from the surface of the main body portion 21 and includes the first sealing portion 22 and the second sealing portion 23.

In an embodiment, the housing 20 is a composite layered structure, including a first layer 24, a second layer (not shown in the figure), and a third layer 25. The second layer is located between the first layer 24 and the third layer 25. The first layer 24 forms the inner surface of the housing 20, and the third layer 25 forms the outer surface of the housing 20. In an embodiment, the first layer 24 and the second layer are connected by a binder, and the second layer and the third layer 25 are connected by a binder.

In an embodiment, the material of the first layer 24 includes but is not limited to polypropylene. In an embodiment, the first layer 24 features corrosion resistance to electrolyte.

In an embodiment, the material of the second layer is metal, including but not limited to aluminum and steel.

In an embodiment, the material of the third layer 25 includes but is not limited to nylon. In an embodiment, the third layer 25 protects the second layer, reducing the risk of the second layer being scratched or punctured.

In an embodiment, the end surface of the second sealing portion 23 away from the main body portion 21 exposes the second layer, which increases the risk of short circuit in the electrochemical device 100. The first edge 11 of the adhesive member 10 is attached to the second sealing portion 23, and the second edge 12 is attached to the third surface 213, covering the exposed second layer at the end of the second sealing portion 23, thereby reducing the risk of short circuit in the electrochemical device 100.

In an embodiment, the housing 20, the electrode assembly 30, and the tab form a pouch cell.

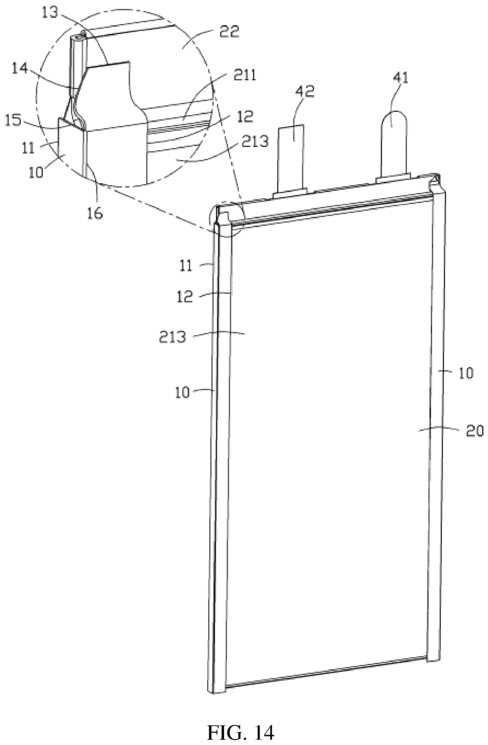

Referring to FIGs. 1, 11, 13, and 14, in an embodiment, the second surface 212 intersects the third surface 213 at the first connection line 214, and the adhesive member 10 has a crease 16, with the crease 16 being opposite the first connection line 214.

In an embodiment, the crease 16 intersects an intersection point of the first boundary line 14 and the second boundary line 15. In an embodiment, the crease 16 intersects the first boundary line 14. In an embodiment, the crease 16 intersects the second boundary line 15. The crease 16 intersects the first boundary line 14 and/or the second boundary line 15, such that when the first edge 11 is attached to a side of the second sealing portion 23 back away from the second surface 212, the adhesive member 10 can cover the exposed second layer of the second sealing portions 23, thereby reducing the risk of short circuit in the electrochemical device 100.

In an embodiment, the crease 16 is parallel to the first edge 11.

In an embodiment, at least part of the adhesive member 10 extends beyond the first surface 211, the part of the adhesive member 10 extending beyond the first surface 211 bends towards the first sealing portion 22, and the third edge 13 is attached to the first surface 211 and/or the first sealing portion 22.

In an embodiment, when the first boundary line 14 intersects the second boundary line 15 to form a structure concave to the adhesive member 10. Preferably, the crease 16 intersects an intersection point of the first boundary line 14 and the second boundary line 15.

In an embodiment, the first boundary line 14 intersects the second boundary line 15 to form a structure convex from the adhesive member 10, and the crease 16 intersects the second boundary line 15, as shown in FIG. 2.

In an embodiment, the thickness of the electrochemical device 100 is D1, and d2≤110%*D1, such that the part of the adhesive member 10 between the crease 16 and the first edge 11 can be stably bonded to the second surface 212 and the second sealing portion 23, reducing the risk of the adhesive member 10 peeling off.

In an embodiment, the length of the first sealing portion 22 extending beyond the first surface 211 is D2, d1≤D2, and d3≤D2, such that the part of the adhesive member 10 extending beyond the first surface 211 can be stably bonded to the first surface 211 and/or the first sealing portion 22, reducing the risk of the adhesive member 10 peeling off.

In an embodiment, the width of the electrochemical device 100 is D3, and d4≤D3, such that the part of the adhesive member 10 between the crease 16 and the second edge 12 can be stably adhered to the third surface 213, reducing the risk of the adhesive member 10 peeling off.

In an embodiment, the main body portion 21 further includes a fourth surface (not shown in the figure), which is opposite the second surface 212 and connects the first surface 211 and the third surface 213. The housing 20 further includes a third sealing portion (not shown in the figure), which extends beyond the fourth surface and bends towards the third surface 213. The electrochemical device 100 includes two adhesive members 10. The first edge 11 of one adhesive member 10 is attached to the second sealing portion 23, the first edge 11 of the other adhesive member 10 is attached to the fourth sealing portion, and the second edge 12 of the other adhesive member 10 is attached to the third surface 213. The adhesive members 10 are attached to the housing 20 in the same manner, which is not elaborated herein.

In an embodiment, the second sealing portion 23 extends beyond the first surface 211 and bends towards the third surface 213, with the part extending beyond the first surface 211 bending towards the first surface 211. In an embodiment, the third edge 13 is partially attached to the first surface 211, to the second sealing portion 23 located on the first surface 211, and to the first sealing portion 22. In an embodiment, the third edge 13 is partially attached to the second sealing portion 23 located on the first surface 211 and to the first sealing portion 22.

In addition, persons skilled in the art can also make other changes within the spirit of this application. Certainly, these changes made according to the spirit of this application shall fall within the scope of this application.

## Claims

1. An adhesive member, comprising a first edge, a second edge, and a third edge, wherein the first edge is opposite to the second edge, the third edge comprises a first end and a second end opposite to the first end, the first end is connected to the second edge, and further comprising:
a first boundary line; and
a second boundary line, wherein two ends of the second boundary line are respectively connected to the first boundary line and the first edge, and two ends of the first boundary line are respectively connected to the second boundary line and the second end;
wherein an included angle R1 is formed by a connection line between the two ends of the first boundary line and a connection line between two ends of the second boundary line, and 5°≤R1≤235°.

2. The adhesive member according to claim 1, wherein 135°≤R1<180°.

3. The adhesive member according to claim 1, wherein the second edge comprises a third boundary line, a fourth boundary line, and a fifth boundary line, and the third boundary line, the fourth boundary line, and the fifth boundary line being connected sequentially, two ends of the third boundary line are respectively connected to the fourth boundary line and the first end, an included angle R2 is formed by a connection line between the two ends of the third boundary line and a connection line between two ends of the third edge, and 0°<R2<180°.

4. The adhesive member according to claim 3, wherein 30°≤R2≤150°.

5. The adhesive member according to claim 3, wherein an included angle R3 is formed by the connection line between the two ends of the third boundary line and a connection line between two ends of the fourth boundary line, and 30°≤R3≤180°.

6. The adhesive member according to claim 5, wherein 60°≤R3≤180°.

7. The adhesive member according to claim 3, wherein an included angle R4 is formed by the connection line between the two ends of the fourth boundary line and a connection line between two ends of the fifth boundary line, and 0°<R4≤180°.

8. The adhesive member according to claim 7, wherein 30°≤R4≤180°.

9. The adhesive member according to claim 1, wherein an included angle R5 is formed by the connection line between the two ends of the first boundary line and a first direction, and 5°≤R5≤60°, the first direction being a length direction of the adhesive member.

10. The adhesive member according to claim 1, an included angle R6 is formed by the connection line between the two ends of the second boundary line and a first direction, and 15°≤R6≤180°, the first direction being a length direction of the adhesive member.

11. An electrochemical device, comprising:
a housing comprising a main body portion, a first sealing portion, and a second sealing portion, wherein the first sealing portion and the second sealing portion are both connected to the main body portion, the main body portion has a first surface, a second surface, and a third surface being connected to each other, the first sealing portion extends beyond the first surface, and the second sealing portion extends beyond the second surface and bends towards the third surface;
an electrode assembly accommodated in the main body portion; and
a tab, wherein one end of the tab connecting to the electrode assembly and another end of the tab extending beyond the housing from the first sealing portion;
wherein the electrochemical device further comprises the adhesive member according to any one of claims 1 to 10, the first edge is attached to a side of the second sealing portion back away from the second surface, the second edge is attached to the third surface, and the third edge is attached to the first surface and/or the first sealing portion.

12. The electrochemical device according to claim 11, wherein
the second surface intersects the third surface at the first connection line;
the adhesive member has a crease, the crease being opposite the first connection line; and
the crease intersects the first boundary line or an intersection point between the first boundary line and the second boundary line.
